# EUROPEAN PATENT APPLICATION

(11) **EP 3 007 174 A1**
(43) Date of publication of application: **13.04.2016**
(21) Application number: 14188127.6
(22) Date of filing: 08.10.2014
(51) Int. Cl.: G21C 3/32, G21C 3/33, G21C 3/356

(54) **Fuel element support and debris filtering lattice for a nuclear fuel assembly**

(71) Applicant: Otkritoye Akcionernoe Obshchestvo "Mashinostroitelny Zavod", Elektrostal 144001 (RU)
(72) Inventor: Mikhailovich, Aksenov Petr, 144010 Moskovskaia obl., g. Elektrostal (RU); Lerner, Alexandr Efimovich, 142400 Moskovskaya obl.,g. Noginsk (RU); Luzan, Yuri Vasilievich, 144004 Moskovskaya, g. Elektrostal (RU); Romanov, Alexandr Ivanovich, 603014 g. Nizhny Novgorod (RU)
(74) Representative: Einsel, Martin

(57) **Abstract**

The invention relates to nuclear power engineering and in particular to heat-generating assemblies (HGA) of nuclear reactors of series VVER (VVER-440, VVER-1000, etc.) where the fuel elements are not fixed in the supporting lattice but rest on it. The supporting filtering lattice (SFL) for the heat-generating assembly of a nuclear reactor is made as a perforated plate (1) having the shape of a hexagon in a plan view and presenting circular openings (2 and 3) designed to bear guiding conduits (GC) or carrying pipes (CP) and a central tube (CT), with channels (4) for the passage of a heat-transfer agent, and with bearing stands (8) to provide contact with the fuel element ends arranged on a regular triangular network. According to the invention, the channels (4) for the passage of a heat-transfer agent are located in each triangular sector of the lattice (1) in rows parallel to the hexagon side corresponding to said sector, and are formed by the crossing of tie plates (5) perpendicular to the respective sides of the hexagon with tie plates (6) parallel to said sides, and, in the locations of the circular openings (2 and 3), with tie plates (7) confining the circular openings (2 and 3). Each bearing stand (8) is located at the place of a common short wall of two corresponding adjacent channels (4) and has a width equal to the summarized width of a channel (4) and of two tie plates (5).

The present claimed solution enables to reduce the hydraulic resistance of the lattice thanks to an increase of the sound section due to the optimization of the shape of the channels for the passage of a heat-transfer agent and of the bearing stands.

## Description

The present invention relates to nuclear power engineering and in particular to elements of the heat-generating assembly (HGA) of a nuclear reactor of series VVER (VVER-440, VVER-1000, etc.), and specifically to supporting lattices simultaneously serving as antidebris filters.

It is known a supporting filtering lattice for the heat-generating assembly of a nuclear reactor having a triangular network of the heat-generating elements (fuel elements) arrangement, made as a perforated plate presenting in a plan view the shape of a hexagon and having circular openings for mounting fuel elements, guiding conduits or carrying pipes, with an opening for a central tube and with openings for the passage of a heat-transfer agent, the centers of the circular openings being located on lines parallel to the hexagon sides, with a spacing S. The openings for the passage of a heat-transfer agent are made up by the crossing of tie plates perpendicular to the respective sides of the hexagon, of tie plates parallel to said sides and of tie plates confining the circular openings, the first tie plates being positioned with a spacing S/4 (RU 113402 U1, published on 10.02.2011). This known lattice provides for filtering properties as well as for the required sound section and strength, which enables the fuel elements having such a supporting lattice to do without any antidebris filter. However, said supporting lattice is designed to secure the fuel element ends inside the openings and is inapplicable in the HGA structures where the fuel elements rest on the surface of the supporting lattice.

The closest to the claimed lattice is a supporting filtering lattice for the heat-generating assembly of a nuclear reactor, made as a perforated plate with circular openings designed to mount guiding conduits or carrying pipes and a central tube, and with openings for the passage of a heat-transfer agent, each opening for the passage of a heat-transfer agent being formed by two straight parallel lines and two arcs of circles, and its length does not exceed S·√3, where S is the spacing of the fuel elements in a bank, furthermore, at least in each lattice symmetry sector, the openings for the passage of a heat-transfer agent are parallel to each other and form between them some stands for bearing the fuel element ends, positioned on a regular triangular network with a spacing S (RU 2447518 C1, published on 10.04.2012).

An object of the present invention is to enhance hydrodynamic characteristics of the supporting filtering lattice.

The technical result of the present invention is to reduce the friction loss of the lattice through an increase of the sound section thanks to the optimization of the channel shape for the passage of a heat-transfer agent and of the supporting stands.

This technical result is provided by the fact that in the supporting filtering lattice (SFL) for the heat-generating assembly of a nuclear reactor, made as a perforated plate having the shape of a hexagon in a plan view and presenting circular openings designed to mount guiding conduits (GC) or carrying pipes (CP) and a central tube (CT), with channels for the passage of a heat-transfer agent, and with bearing stands to provide contact with the fuel element ends arranged on a regular triangular network, according to the invention, the channels for the passage of a heat-transfer agent are located in each triangular sector of the lattice in rows parallel to the hexagon side corresponding to said sector, and are formed by the crossing of tie plates perpendicular to the respective sides of the hexagon, of tie plates parallel to said sides, and, in the locations of the circular openings, of tie plates confining the circular openings, each bearing stand being located at the place of a common short wall of two corresponding adjacent channels and having a width equal to the summarized width of the channel and of two tie plates.

In addition, the channels are preferably made by hydroabrasive cutting.

The invention is further described with reference to accompanying drawings.
- **Fig. 1**: shows a SFL with sound channels perpendicular to the lattice faces.
- **Fig. 2**: shows the same view, but having the sound channels that are parallel to the lattice faces.

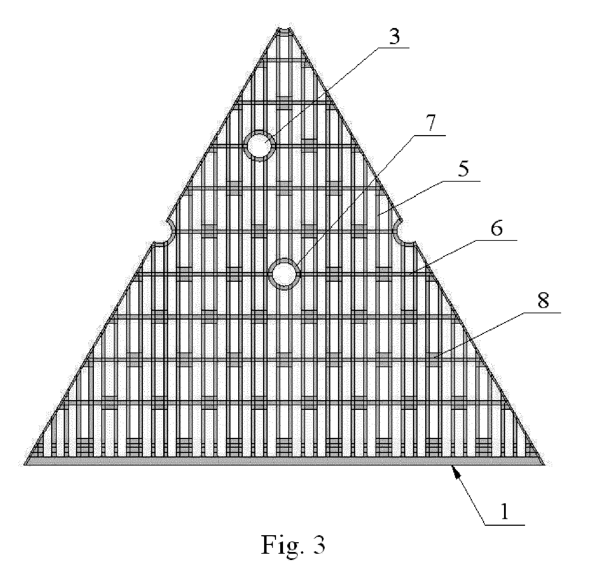

- **Fig.3**: shows an enlarged fragment of the SFL according to the invention.

The supporting filtering lattice for the heat-generating assembly of a nuclear reactor represents a hexagonal perforated plate 1 with circular openings designed to bear the GCs or CPs (openings 2) and the CT (opening 3), and with openings for the passage of a heat-transfer agent made as long, preferably rectangular channels 4 each one of them having two long and two short walls. The channels 4 in each sector of the hexagon are arranged in rows parallel to a face of the lattice 1 (a hexagon side) corresponding to this sector, and are formed by crossing of tie plates 5 perpendicular to the faces of the lattice 1 (hexagon sides), of tie plates 6 perpendicular to the tie plates 5, and of tie plates 7 confining the circular openings 2, 3. The spacing of the tie plates 5 is equal to (0.2...0.3) s, the spacing of the tie plates 6 does not exceed (0.5...1,0) s, where s is the spacing of the fuel elements in the HGA.

The tie plates 5 and 6 have a thickness of 0.7...1.2 mm, the channels 4 having the width of 1.5...2.5 mm.

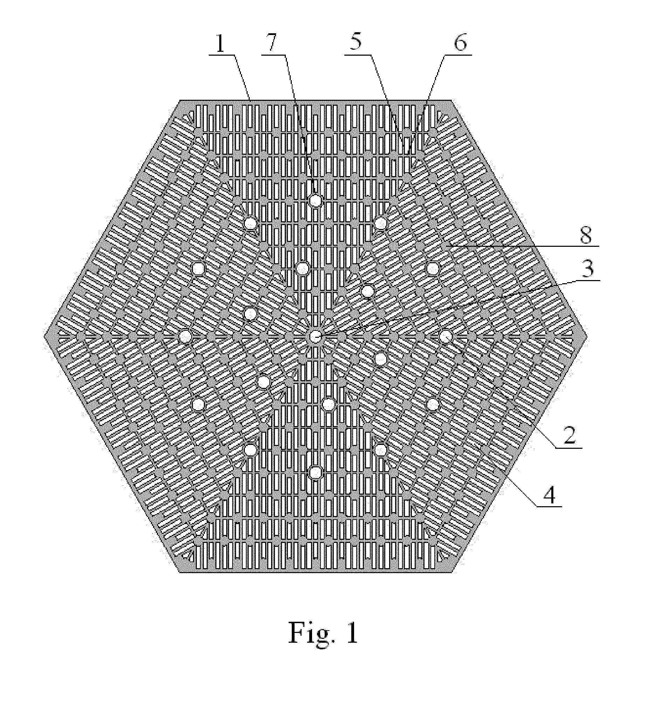

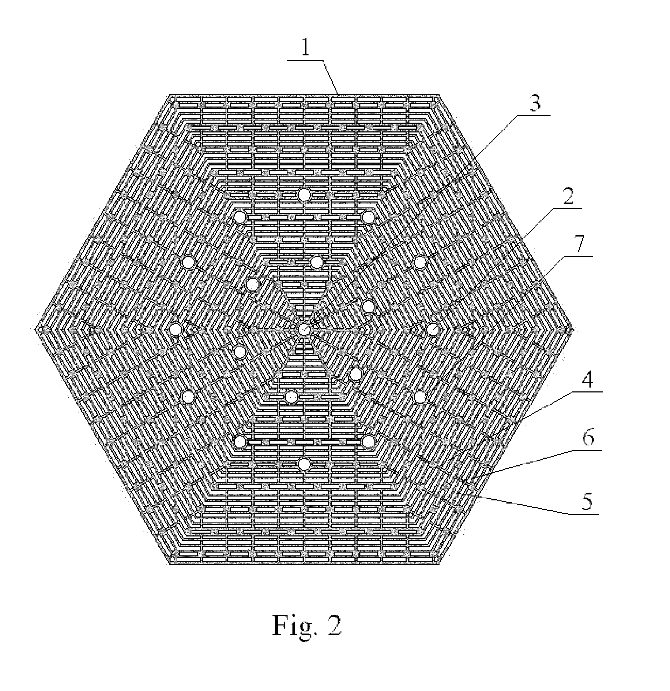

The channels 4 can be arranged with their long faces perpendicular to the SFL faces, like shown in Fig. 1, or with their long faces parallel to the plate 1 faces, according to Fig. 2.

The SFL has bearing stands 8 to contact the fuel elements ends located on a regular triangular network. Every bearing stand 8 is located at the place of a common short wall of two corresponding adjacent channels 4 and has a width equal to the summarized width of the channel 4 and of two tie plates 5.

The bearing stands 8 of the SFL present straight sides in a plan view that is why the channels 4 adjacent to the bearing stands have a rectangular shape. The channels 4 adjacent to the openings 2 and 3 and antipodal to a respective opening have a rectangular shape as well. The remaining channels 4 adjacent to the openings 2 and 3 have one beveled side.

The sound section of the SFL according to the invention is considerably higher (of 10 to 20%) than for the SFL of the closest prior art due to the fact that the most of the channels 4 present a rectangular shape in a plan view, and in the case of the closest prior art, the channels are rounded at their ends.

The SFL according to the invention presents a high symmetry degree, an optimal arrangement of the tie plates and the optimal shape of the bearing stands together with minimized sizes of the bearing stands taking into consideration the requirements on admissible lack of linearity of the fuel element ends, which provides an increased sound section for the claimed SFL in comparison with the closest prior art.

The SFL is made with the use of a highly productive technology of hydroabrasive cutting that enables to provide the walls for the passage of a heat-transfer agent with an inclination of up to several degrees (in the prototypes, it was 1 to 2 degrees), that depends on the cutting parameters. Orienting the SFL with its side of higher area of the openings face to the heat-transfer agent flow provides for a higher improved SFL hydraulics thanks to the reducing of the hydraulic resistance for the heat-transfer agent inlet into the SFL with simultaneous keeping of the antidebris properties, i.e. of the necessary width of the openings at the heat-transfer agent flow outlet from the SFL to the space between the fuel elements.

## Claims

1. Supporting filtering lattice for the heat-generating assembly of a nuclear reactor, made as a perforated plate having the shape of a hexagon in a plan view and presenting circular openings designed to mount guiding conduits or carrying pipes and a central tube, with channels for the passage of a heat-transfer agent, and with bearing stands to provide contact with the fuel element ends arranged on a regular triangular network,
**wherein** the channels for the passage of a heat-transfer agent are located in each triangular sector of the lattice in rows parallel to the hexagon side corresponding to said sector, and are formed by the crossing of tie plates perpendicular to the respective sides of the hexagon, of tie plates parallel to said sides, and, in the locations of the circular openings, of tie plates confining the circular openings, each bearing stand being located at the place of a common short wall of two corresponding adjacent channels and having a width equal to the summarized width of a channel and of two tie plates.

2. Lattice of claim 1,
**wherein** the channels are made by hydroabrasive cutting.
